(19) Europäisches Patentamt
European Patent Office
Office européen des brevets

(11) EP 2 443 789 B1

(12) FASCICULE DE BREVET EUROPEEN

(45) Date de publication et mention
de la délivrance du brevet:
**07.08.2013 Bulletin 2013/32**

(51) Int Cl.:
*H04L 9/30* (2006.01)  *G06F 7/72* (2006.01)
*H04L 9/28* (2006.01)  *G06F 17/10* (2006.01)
*G06F 7/58* (2006.01)

(21) Numéro de dépôt: **10738014.9**

(22) Date de dépôt: **15.06.2010**

(86) Numéro de dépôt international:
**PCT/FR2010/051191**

(87) Numéro de publication internationale:
**WO 2010/146303 (23.12.2010 Gazette 2010/51)**

(54) **Cryptographie sur une courbe elliptique simplifiee**

Kryptografie auf einer vereinfachten elliptischen Kurve

Cryptography on a simplified elliptical curve

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **16.06.2009 FR 0954043**

(43) Date de publication de la demande:
**25.04.2012 Bulletin 2012/17**

(73) Titulaire: **MORPHO**
**92130 Issy Les Moulineaux (FR)**

(72) Inventeur: **ICART, Thomas**
**F-75015 Paris (FR)**

(74) Mandataire: **Cabinet Plasseraud**
**52, rue de la Victoire**
**75440 Paris Cedex 09 (FR)**

(56) Documents cités:
**WO-A-00/05837**

• **SHALLUE A ET AL: "Construction of rational points on elliptic curves over finite fields", ALGORITHMIC NUMBER THEORY. 7TH INTERNATIONAL SYMPOSIUM, ANTS-VII. PROCEEDINGS (LECTURE NOTES IN COMPUTER SCIENCE VOL.4076) SPRINGER-VERLAG BERLIN, GERMANY, 2006, pages 510-524, XP002563570, Extrait de l'Internet: URL: http://www.springerlink.com/content/73 w83650p1077018/fulltext.pdf [extrait le 2006-01-18]**

**Description**

La présente invention concerne la cryptographie de messages basée sur l'utilisation de points d'une courbe elliptique, et plus particulièrement une telle cryptographie de manière déterministe.

Afin d'appliquer un calcul cryptographique à un message, on met classiquement en oeuvre des algorithmes d'insertion de valeurs arbitraires au sein de structures mathématiques. A cet effet, les courbes elliptiques sont des structures mathématiques qui permettent à la fois de faciliter la mise en oeuvre de tels calculs cryptographiques et de sauver de la place mémoire par rapport à la mise en oeuvre d'autres calculs cryptographiques.

Toutefois, les algorithmes efficaces d'insertion de valeurs arbitraires utilisant les courbes elliptiques sont probabilistes. Par conséquent, le temps de mise en oeuvre de tels algorithmes n'est pas constant, il est fonction du message à coder. Ainsi, si un attaquant détermine différents temps de mise en oeuvre de l'algorithme appliqué, il peut obtenir des informations sur le message codé.

Afin de masquer le temps utilisé par un algorithme d'insertion probabiliste, il est possible de prévoir d'ajouter des étapes inutiles dans cet algorithme afin que son application s'étale toujours sur une période de temps de longueur identique, quel que soit le message traité.

Un point P d'une courbe elliptique est défini par son abscisse X et son ordonnée Y, X et Y vérifiant l'équation suivante :

$$f(X)=Y^2 \qquad\qquad (1)$$

où f(X) est le polynôme f(X) = $X^3 + aX + b$

On connait une famille de polynômes, vérifiant l'égalité de Skalba qui permet de déterminer un tel point d'une courbe elliptique, telle que définie dans le document 'Construction of Rational Points on Elliptic Curves over finite fields' de Andrew Shallue et Christiaan van de Woestijne.

Des polynômes $X_1(t)$, $X_2(t)$, $X_3(t)$ et U(t) vérifient l'égalité de Skalba s'ils vérifient l'équation suivante :

$$f(X_1(t)).f(X_2(t)).f(X_3(t))=U^2(t) \qquad\qquad (2)$$

où f est la fonction qui définit la courbe elliptique considérée, et
où t est un paramètre.

Les polynômes vérifiant l'égalité de Skalba peuvent prendre deux paramètres u et t. Dans ce cas, l'égalité de Skalba s'écrit :

$$f(X_1(t,u)).f(X_2(t,u)).f(X_3(t,u))=U^2(t,u)$$

On peut utiliser ce type d'équations avec deux paramètres u et t. Toutefois, dans les applications visées, on peut avantageusement prévoir de fixer u, ou encore de fixer t, à une valeur quelconque. Ainsi, la valeur d'un seul paramètre reste à choisir.

Etant donné des paramètres choisis t et u, on note $X_1 = X_1(t,u)$, $X_2 = X_2(t,u)$, $X_3 = X_3(t,u)$, $U = U(t,u)$, où $X_1$, $X_2$, $X_3$ et U sont des éléments de $F_q$. Cette équation (2) signifie que l'une au moins parmi les valeurs $f(X_1)$, $f(X_2)$ et $f(X_3)$ correspond à un terme au carré dans le corps fini Fq,

Puis, une fois que le terme au carré dans Fq, $f(X_i)$, est identifié, on peut ensuite obtenir un point de la courbe elliptique $P(X_i, \sqrt{f(X_i)})$.

Le calcul de $\sqrt{f(X_i)}$ peut se faire à l'aide d'un calcul d'exponentiation lorsque la caractéristique q du corps Fq vérifie :

$$q = 3 \bmod 4$$

Dans ce cas, il est connu que :

$$\sqrt{f(X_i)} = f(X_i)^{(q+1)/4} \qquad (3)$$

Pour déterminer un point de la courbe elliptique (1), il convient donc de déterminer quelle valeur parmi les trois valeurs $f(X_1)$, $f(X_2)$ et $f(X_3)$ correspond à un terme au carré dans le corps fini Fq. On pourrait à cet effet prévoir de contrôler en premier lieu si le terme $f(X_1)$ est un terme au carré dans le corps fini Fq, puis, si tel n'est pas le cas, appliquer ce même contrôle au terme $f(X_2)$, et enfin si ce n'est toujours pas le cas contrôler le terme $f(X_3)$ de manière similaire. Toutefois, en procédant ainsi, la détermination d'un point sur la courbe elliptique ne consomme pas toujours le même temps, puisque cette détermination est plus rapidement effectuée si le premier terme contrôlé est un terme au carré que si le troisième terme seulement est un terme au carré.

Un potentiel attaquant pourrait tirer partie de cette différence de temps passé à déterminer un point sur la courbe elliptique pour violer le secret lié au paramètre ayant permis de générer ce point. Or, dans le domaine de la cryptographie, ces paramètres doivent rester secrets.

Ces paramètres peuvent notamment correspondre à des mots de passe. Ainsi, il est important que la détermination de ces points ne fournisse pas en elle-même des informations permettant de violer le secret du paramètre, et de ce fait, des attaques basées sur une analyse du temps passé à déterminer un point de la courbe sont à éviter.

Pour pallier ce désavantage, il serait possible de contrôler systématiquement les trois termes $f(X_i)$ pour i allant de 1 à 3. Ainsi, le temps pour déterminer un point de la courbe ne serait plus fonction du point déterminé.

Mais, le fait de contrôler si un terme de l'équation (2) est un terme au carré dans le corps fini Fq est une opération complexe mettant notamment en oeuvre une exponentiation qui est coûteuse en temps d'exécution. Dans le cas où l'on souhaite déterminer un point d'une courbe elliptique sur la base des égalités de Skalba, tout en effectuant ces déterminations à temps constant, quatre opérations d'exponentiation sont requises dans le cas décrit ci-dessus, une exponentiation par contrôle de chacun des termes de l'équation (2) de Skalba et une exponentiation pour calculer la racine carrée, tel que décrit dans l'équation (3).

La présente invention vise à améliorer la situation.

Un premier aspect de la présente invention propose un procédé d'exécution d'un calcul cryptographique dans un composant électronique comprenant une étape d'obtention d'un point P(X,Y) à partir d'au moins un paramètre t, sur une courbe elliptique vérifiant l'équation :

$$Y^2 = f(X) \ ;$$

et
à partir de polynômes $X_1(t)$, $X_2(t)$ et $U(t)$ vérifiant l'égalité suivante :

$$-f(X_1(t)).f(X_2(t)) = U(t)^2$$

dans le corps fini Fq, quel que soit le paramètre t, q vérifiant l'équation q = 3 mod 4;
ledit procédé comprenant les étapes suivantes :

/1/ obtenir une valeur du paramètre t ;
/2/ déterminer le point P en effectuant les sous étapes suivantes :

/i/ calculer $X_1 = X_1(t)$, $X_2 = X_2(t)$ et $U = U(t)$
/ii/ tester si le terme $f(X_1)$ est un terme au carré dans le corps fini Fq et dans ce cas, calculer la racine carré du terme $f(X_1)$, le point P ayant pour abscisse $X_1$ et pour ordonnée la racine carré du terme $f(X_1)$ ;
/iii/ sinon calculer la racine carré du terme $f(X_2)$, le point P ayant pour abscisse $X_2$ et pour ordonnée la racine carré du terme $f(X_2)$ ;

/3/ utiliser ledit point P dans une application cryptographique de chiffrement ou de hachage ou de signature ou d'authentification ou d'identification.

Il convient ici de noter que la détermination d'un point sur une courbe elliptique est effectuée sur la base d'une équation avantageuse :

$$-f(X_1).f(X_2)=U^2 \qquad (4)$$

Cette équation découle de l'égalité de Skalba (2). En effet, on peut obtenir cette équation en posant :

$$f(X_3) = -1$$

Or, dans le corps fini $F_q$, avec q = 3 mod 4, le -1 n'est pas un terme au carré. Par conséquent, seulement deux termes de l'équation (4) restent encore à être contrôlé pour décider lequel des deux termes correspond à un terme au carré dans Fq.

Grâce à ces dispositions, on peut déterminer un point d'une courbe elliptique de manière adaptée à une utilisation dans le domaine de la cryptographie, puisque d'une part, cette détermination consomme le même temps quel que soit le paramètre d'entrée t et d'autre part, elle est efficace car le nombre d'opérations lourdes est réduit.

Cette détermination consomme un temps constant qui n'est pas dépendant du ou des paramètres d'entrée. En effet, même si ce procédé offre différentes voix de traitement en fonction du terme qui correspond à un terme au carré dans l'égalité de Skalba, le même nombre d'opérations de même type est effectué quel que soit le point de la courbe déterminé. De manière plus précise, quelque soit le point de la courbe déterminé, on effectue la liste des opérations suivantes :

- test d'un terme au carré dans Fq ;
- détermination d'une racine carrée.

Il n'est donc pas possible de procéder à une attaque de type 'timing attack'.

En outre, cette détermination est efficace puisque le nombre des opérations coûteuses mises en oeuvre est limité. En effet, grâce à l'équation (4), seuls deux termes, au lieu de trois dans l'équation (2), sont à contrôler pour déterminer s'ils correspondent à des termes au carré dans le corps fini Fq, en mettant en oeuvre au maximum deux opérations de type exponentiation.

Ce mode de réalisation est général et peut aisément être appliqué à toute famille de polynômes vérifiant l'égalité (4).

Dans un mode de réalisation de la présente invention, il est prévu, à l'étape /2/-/ii/, d'effectuer les étapes suivantes :

- calculer $R_1$ tel que :

$$R_1 = f(X_1)^{\frac{q-1}{2}}$$

- si $R_1$ est égal à 1,

  - décider que le terme $f(X_1)$ est un terme au carré dans le corps $F_q$ ; et

  - $Y_1 = f(X_1)^{\frac{q+1}{4}}$ calculer

-

  sinon, calculer $Y_2 = f(X_2)^{\frac{q+1}{4}}$

Ici, seules deux exponentiations sont effectuées, quelle que soit la voie de traitement appliquée.

Dans un autre mode de réalisation, il est encore possible de réduire le nombre d'exponentiations, qui sont les opérations les plus lourdes à réaliser dans ce procédé. En effet, à l'étape /2/-/ii/, on peut effectuer les étapes suivantes :

- calculer $R_1'$ tel que :

$$R_1' = f(X_1)^{(q-1)-\frac{q+1}{4}}$$

- calculer $R_2'$ tel que :

$$R_2' = R_1'^2$$

- calculer $R_3'$ tel que :

$$R_3' = R_2'.f(X_1)$$

et si $R_3'$ n'est pas égal à 1, à l'étape /2/-/iii/, on obtient la racine carré de $f(X_2)$ selon l'équation suivante :

$$\sqrt{f(X_2)} = R_0.R_1'$$

où $R_0$ vérifie l'équation suivante :

$$R_0 = U(t).(-1)^{(q-1)-\frac{q+1}{4}}$$

Il convient de noter ici que, avantageusement, seule une exponentiation est effectuée dans ce cas au cours de l'exécution d'un procédé selon un mode de réalisation de la présente invention.

En effet, on utilise astucieusement le fait que l'on peut finalement récupérer la racine carré de $f(X_2)$ dans le cas où le terme $f(X_2)$ correspond à un terme au carré, sans toutefois mettre en oeuvre une exponentiation supplémentaire. En effet, la racine carré de $f(X_2)$ s'obtient par :

$$\sqrt{f(X_2)} = R_0.R_1'$$

où le terme $R_0$ est finalement obtenu par une opération de multiplication qui est moins lourde que la mise en oeuvre d'une exponentiation. De plus, seul le terme U(t) est à calculer dans ce mode de réalisation car le terme

$$(-1)^{(q-1)-\frac{q+1}{4}}$$

est un terme de calcul immédiat. Il n'est nullement utile de ce fait de pré-calculer ce dernier terme et de le stocker dans une mémoire. On peut donc sauver de la place mémoire.

Puis, si $R_3'$ est égal à 1, alors à l'étape /2/-/iii/, on peut obtenir la racine carré de $f(X_1)$ selon l'équation suivante :

$$\sqrt{f(X_1)} = R_3'.f(X_1)$$

Ce qui correspond également à une multiplication.

Lors de l'exécution de tels calculs selon un mode de réalisation de la présente invention, le temps consommé pour la mise en oeuvre des opérations autres qu'une exponentiation est négligeable au regard du temps consommé par la mise en oeuvre d'une exponentiation. Or, grâce aux caractéristiques de la présente invention, on peut passer de quatre exponentiations, comme décrit ci-avant dans un cas classique, à deux exponentiations au maximum. Une telle réduction du nombre d'exponentiation est très avantageuse.

Dans un mode de réalisation de la présente invention, les polynômes vérifiant l'équation (4) selon un mode de réalisation de la présente invention en X et Y sont exprimés dans des coordonnées jacobiennes en X', Y' et Z telles que :

$$X' = X \cdot Z^2,$$

$$Y' = Y.Z^3$$

et les opérations d'inversion sont transformées en opération de multiplication.

La transformation en coordonnées jacobiennes permet de transformer les inversions en multiplications, lorsque le terme Z est correctement choisi.

Dans un mode de réalisation de la présente invention, les polynômes sont exprimés dans des coordonnées jacobiennes selon lesquelles le point P(X,Y) s'écrit P(X',Y',Z) telles que :

$$X' = X \cdot Z^2,$$

$$Y' = Y.Z^3$$

où la fonction f s'écrit $f_z(X')$ et vérifie :

$$f_Z(X') = X'^3 + a.X'.Z^4 + b.Z^6$$

la courbe elliptique vérifiant l'équation :

$$Y'^2 = f_Z(X')$$

dans lequel les polynômes exprimés en coordonnées jacobiennes sont X'$_1$(t), X'$_2$(t), Z(t) et U'(t) et vérifient l'égalité suivante en coordonnées jacobiennes :

$$U'(t)^2 = -f_{Z(t)}(X'_1(t)).f_{Z(t)}(X'_2(t)))$$

et dans lequel Z(t) est déterminé de façon à ce que les opérations d'inversion soient transformées en opération de multiplication.

A l'étape /1/, la valeur du paramètre t peut être obtenue en fonction d'un mot de passe ou un identifiant. On peut ainsi prévoir de prendre en tant que paramètre le mot de passe directement ou encore un dérivé du mot de passe.

Dans un mode de réalisation de la présente invention, l'application cryptographique est une application d'authentification ou d'identification par une entité de contrôle, et

à l'étape /1 /, on réalise les étapes suivantes :

/a/ générer une valeur aléatoire ;

/b/ obtenir une valeur chiffrée en chiffrant ladite valeur aléatoire sur la base d'une fonction de chiffrement utilisant une clé de chiffrement déterminée à partir d'un mot de passe ou identifiant correspondant au paramètre ; et

/c/ transmettre la valeur chiffrée à l'entité de contrôle.

En procédant ainsi, l'entité de contrôle est en mesure d'obtenir la valeur aléatoire en fonction de la valeur chiffrée reçue à partir du mot de passe. Puis, elle récupère la valeur du paramètre t en appliquant une fonction adaptée.

Un deuxième aspect de la présente invention propose un dispositif électronique comprenant des moyens adaptés pour la mise en oeuvre d'un procédé d'exécution d'un calcul cryptographique selon le premier aspect de la présente invention.

D'autres aspects, buts et avantages de l'invention apparaîtront à la lecture de la description d'un de ses modes de réalisation.

L'invention sera également mieux comprise à l'aide des figures suivantes :

- la figure 1 illustre les principales étapes d'un procédé d'exécution d'un calcul cryptographique selon un mode de réalisation de la présente invention ;
- la figure 2 illustre un procédé d'exécution d'un calcul cryptographique en détail selon un mode de réalisation de la présente invention ; et
- la figure 3 illustre un procédé d'exécution d'un calcul cryptographique en détail selon un mode de réalisation de la présente invention.

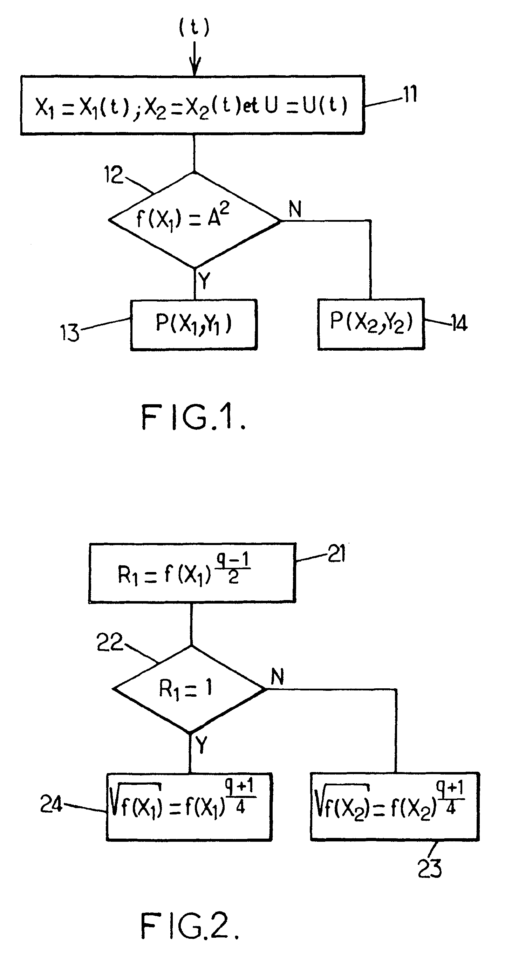

La figure 1 illustre les principales étapes d'un procédé d'exécution d'un calcul selon un mode de réalisation de la présente invention.

Ces principales étapes sont adaptées pour la détermination d'un point sur une courbe elliptique dans le but d'utiliser ce point au sein d'une application cryptographique. Un tel calcul cryptographique peut être exécuté dans un composant électronique de manière sécurisée, c'est-à-dire sans que la détermination de ce point ne donne une quelconque information sur le point déterminé, et de ce fait sur le paramètre t.

Ce calcul comprend, dans un corps fini Fq, où q est égal à 3 mod 4, une étape d'obtention d'un point P(X,Y) sur une courbe elliptique vérifiant l'équation :

$$Y^2 = f(X)$$

Un point P(X,Y) a son abscisse X qui correspond à l'un parmi $X_1(t)$ et $X_2(t)$, pour une valeur de t obtenue, tels que :

$$-f(X_1(t)).f(X_2(t))=U^2(t) \qquad\qquad (4)$$

dans le corps fini $F_q$.

De tels polynômes peuvent être fonction de deux paramètres u et t. Dans le contexte de la présente invention, un des paramètres peut avantageusement être fixé et par conséquent les polynômes vérifiant l'équation (4) sont alors fonction d'un seul paramètre t.

De manière générale, afin de déterminer un point sur la courbe, on cherche à déterminer, étant donné des paramètres d'entrée u et t, celles parmi les valeurs $X_1= X_1(t,u)$ et $X_2= X_2(t,u)$ qui correspond à un terme au carré dans le corps fini Fq. A cet effet, à une étape 11, on prend le paramètre t en compte et on calcule :

$$X_i=X_i(t)$$

pour i égal à 1 ou 2,
et

$$U=U(t)$$

A une étape 12, on décide si le terme $f(X_1)$ est un terme au carré sur la base de certains calculs. Si le terme f$(X_1)$ est un terme au carré alors on calcule sa racine carré afin d'obtenir, à une étape 13, le point P d'abscisse $X_1$ et d'ordonnée $Y_1$, issue du calcul de la racine carré précédent.

Dans le cas contraire, on obtient à une étape 14 le point P d'abscisse $X_2$ et d'ordonnée $Y_2$. On prévoit à cet effet de calculer la racine carré du terme $f(X_2)$.

Il convient de noter qu'atteindre les étapes 13 ou 14 d'obtention d'un point de la courbe elliptique selon un mode de réalisation de la présente invention requiert des opérations similaires. Ainsi, quel que soit le ou les paramètres d'entrée t et u, il n'est pas possible de faire une attaque sur la base du temps passé.

Le point $P(X_i,Y_i)$, pour un i égale à 1 ou 2, peut ensuite être utilisé avantageusement dans une application cryptographique de chiffrement ou de hachage ou de signature ou d'authentification ou d'identification, puisque sa détermination n'a fourni aucun élément susceptible de violer son secret.

Dans le corps $F_q$, q correspondant à 3 mod 4, il est possible de contrôler si un terme est un terme au carré de différentes manières.

La figure 2 illustre la mise en oeuvre du procédé selon un mode de réalisation de la présente invention.

A une étape 21, on calcule :

$$R_1 = f(X_1)^{\frac{q-1}{2}}$$

Puis, le test pour contrôler si le terme $f(X_1)$ est un terme au carré dans Fq, peut être effectué, à une étape 22, en comparant $R_1$ à 1. En effet, dans Fq, si $R_1$ est égal à 1, alors $f(X_1)$ est un terme a carré. Dans ce cas, à l'étape 24, on calcule la racine carré de ce terme comme suit:

$$\sqrt{f(X_1)} = f(X_1)^{\frac{q+1}{4}}$$

Sinon, c'est le terme $f(X_2)$ qui est un terme au carré. Alors, à une étape 23, on en calcule sa racine carré comme suit :

$$\sqrt{f(X_2)} = f(X_2)^{\frac{q+1}{4}}$$

Dans ce mode de réalisation, il convient de noter que le nombre et le type d'opérations effectuées pour la détermination d'un point P est le même quel que soit la voie de traitement empruntée, c'est-à-dire quel que soit le terme qui corresponde dans l'équation (4) à un terme au carré.

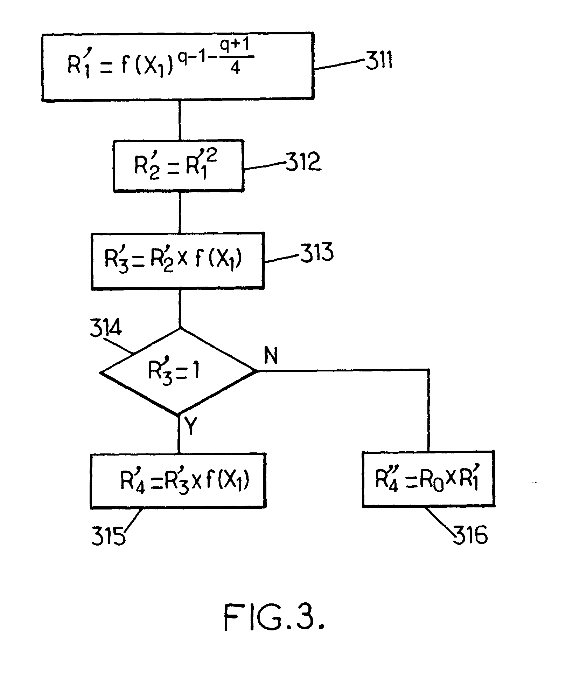

La figure 3 illustre un autre mode de réalisation d'un procédé d'exécution selon un mode de réalisation de la présente invention dans lequel, seule une exponentiation est mise en oeuvre.

Ici, avantageusement, on peut réduire encore le nombre d'exponentiation mises en oeuvre, en n'utilisant pas le même test de terme au carré 12 de la figure 1.

Dans un mode de réalisation de la présente invention, lorsqu'on cherche à déterminer si un terme A est un terme au carré dans Fq, on peut effectuer les étapes suivantes :

$$W_1 = \frac{1}{A^{\frac{q+1}{4}}} = A^{(q-1)-\frac{q+1}{4}} \qquad\qquad \text{(i)}$$

$$W_2 = W_1^2 \qquad\qquad\qquad \text{(ii)}$$

$$W_3 = W_2.A \qquad\qquad\qquad \text{(iii)}$$

In fine, si le terme A est un terme au carré alors :

- 

   $W_1$ correspond à l'inverse de la racine carré de A, soit $1/\sqrt{A}$, car une exponentiation à (q-1) correspond à une inversion et une exponentiation à (q+1)/4 correspond à une racine carré dans le corps fini $F_q$;

- $W_2$ correspond à l'inverse de A ; et
- $W_3$ correspond à la valeur 1.

Ainsi, lorsque $W_3$ est égal à la valeur 1, on en conclue que le terme A est un terme au carré dans le corps fini $F_q$. Si A n'est pas un terme au carré alors $W_3$ n'est pas égal à 1.

Les sections suivantes décrivent un mode de réalisation basée sur ce type de test. Dans un mode de réalisation de la présente invention, à une étape 311, on effectue la multiplication suivante :

$$R_1^{'} = f(X_1)^{(q-1)-\frac{q+1}{4}}$$

Puis, on contrôle si ce terme $R_0$ est un terme au carré comme énoncé ci-avant. Ainsi, à une étape 312, on calcule :

$$R_2^{'} = R_1^{'2}$$

Puis, à une étape 313, on calcule :

$$R_3^{'} = R_2^{'}.f(X_1)$$

Ensuite, on décide si le terme $R'_3$ est égal à 1 à une étape 314. Si tel est le cas, si tel est le cas, alors le terme suivant correspond à la racine carré du terme $f(X_1)$ :

$$R_4^{'} = R_3^{'}.f(X_1)$$

SI le test 314 n'est pas vérifié, alors c'est le terme $f(X_2)$ qui est un terme au carré dans Fq. On obtient donc, à une étape 316, la racine carré de ce terme suivant l'équation suivante :

$$R_4^{''} = R_0.R_1^{'}$$

où $R_0$ vérifie l'équation suivante :

$$R_0 = U(t).(-1)^{(q-1)-\frac{q+1}{4}}$$

Il convient de noter que l'équation ci-dessus permet d'obtenir avantageusement la racine carré de $f(X_2)$ sans toutefois effectuer une opération d'exponentiation comme celle effectuée à l'étape 23 ou encore à l'étape 311. En effet, ici il s'agit d'effectuer astucieusement une multiplication au lieu d'une exponentiation.

On obtient alors $R_4''$ qui correspond au terme $f(X_2)$. On a ainsi déterminé un point P de la courbe elliptique qui a pour abscisse $X_2$ et pour ordonnée $R''_4$.

Dans le mode de réalisation décrit ci-avant en référence à la figure 3, comme celui décrit en référence à la figure 2, quelle que soit la détermination du point P, c'est-à-dire que cette détermination soit basée sur la valeur $X_1$ ou $X_2$, des calculs similaires sont mis en oeuvre garantissant ainsi une détermination de point de la courbe elliptique à temps constant.

Dans un mode de réalisation de la présente invention, il est possible de choisir des polynômes vérifiant l'équation (4) selon un mode de réalisation de la présente invention, en se fondant sur des polynômes d'Ulas, tels que définis dans le document 'Rational points on certain hyperelliptic curves over finite fileds' de Macie Ulas, daté du 11 juin 2007.

Dans ce document, les polynômes de vérifiant l'équation de Skalba (2) sont décrits :

$$X_1(t,u) = -\frac{b}{a}\left(1 + \frac{1}{t^4 f(u) + t^2 f(u)}\right)$$

$$X_2(t,u) = t^2 f(u) X_1(t,u)$$

$$X_3(t,u) = u$$

$$U(t,u) = t^3 f(u)^4 f(X_1(t,u))$$

où

$$f(u) = u^3 + au + b$$

où a et b sont des éléments de Fq tel que leur produit ne soit pas nul.

Ainsi, les équations peuvent se réécrire en fixant :

$$f(u) = -1$$

sans qu'il soit nécessaire de calculer une valeur du paramètre u pour lequel cette dernière équation est vérifiée. On obtient alors :

$$X_1(t) = -\frac{b}{a}\left(1 + \frac{1}{t^4 - t^2}\right)$$

$$X_2(t) = -t^2 X_1(t),$$

et

$$U(t) = t^3 f(X_1(t))$$

Avantageusement, ces polynômes vérifient l'équation suivante :

$$-f(X_1(t)).f(X_2(t))=U(t)^2$$

Dans un mode de réalisation de la présente invention, on prévoit d'utiliser avantageusement les coordonnées jacobiennes. Une telle transformation en coordonnées jacobiennes permet de transformer les opérations d'inversion en opérations de multiplication qui sont plus rapides et plus aisées à mettre en oeuvre.

L'équation d'une courbe elliptique :

$$X^3 + aX + b = Y^2$$

peut s'écrire en coordonnées jacobiennes:

$$X'^3 + aX'Z^4 + bZ^6 = Y'^2$$

On note que les coordonnées d'un point (X,Y) peuvent s'écrire en coordonnées jacobiennes (X',Y',Z') tels que:

$$X' = X \cdot Z^2$$

et

$$Y' = Y.Z^3$$

Il convient donc de déterminer un polynôme Z(t,u) de telle sorte que les coordonnées jacobiennes X', Y' et Z puissent s'écrire sans inversion.

Dans les sections suivantes, on applique cette transformation en coordonnées jacobiennes à un cas particulier de polynômes tels qu'énoncés ci-avant.

Dans ce contexte, on élimine toute opération d'inversion en prenant :

$$Z(t) = a(t^4 - t^2)$$

En effet, on peut alors écrire les polynômes sous la forme suivante en coordonnées jacobiennes :

$$X'_1(t) = -b.Z(t)(t^4 - t^2 + 1)$$

$$X'_2(t) = -t^2.X'_2(t)$$

Il convient donc de noter qu'il n'y a plus d'inversion en coordonnées jacobiennes. Cette opération pouvant être aussi couteuse qu'une exponentiation, ces coordonnées permettent une amélioration significative du temps de calcul.

Puis, pour obtenir la coordonnée Y' jacobienne, il convient de calculer U'(t,u), l'équivalent de U(t,u) en coordonnées jacobiennes.

On peut écrire en coordonnées jacobiennes :

$$U'(t) = t^3.f_Z(X_2'(t))$$

avec :

$$f_{Z(t)}(\mathbf{X'}) = \mathbf{X'^3} + a.\mathbf{X'}.\mathbf{Z}(t)^4 + b.\mathbf{Z}(t)^6$$

A titre d'exemple seulement, les équations ci-dessous permettent de ne plus avoir à effectuer d'opérations d'inversion. Dans ces conditions, on obtient alors un procédé d'exécution encore plus efficace et rapide, tout en garantissant une exécution toujours à temps constant.

La présente invention peut avantageusement être mise en oeuvre dans tout type de calcul cryptographique utilisant des courbes elliptiques. Elle peut notamment être avantageuse au sein de protocoles d'authentification par mot de passe, comme PACE (pour 'Password Authenticated Connection Establishment' en anglais). Dans ce cas, elle permet une amélioration des performances de calculs, tout en ne permettant aucune attaque liée au temps d'exécution du calcul cryptographique.

La présente invention peut également être avantageusement appliquée dans le contexte des protocoles respectant la vie privée, tels que ceux qui sont utilisés pour le contrôle de documents d'identité électronique, comme les passeports électroniques.

## Revendications

1. Procédé d'exécution d'un calcul cryptographique dans un composant électronique comprenant une étape d'obtention d'un point P(X,Y) à partir d'au moins un paramètre t, sur une courbe elliptique vérifiant l'équation :

$$Y^2 = f(X) \; ;$$

et
à partir de polynômes $X_1(t)$, $X_2(t)$ et $U(t)$ vérifiant l'égalité suivante :

$$-f(X_1(t)).f(X_2(t)) = U(t)^2$$

dans le corps fini Fq, quel que soit le paramètre t, q vérifiant l'équation q = 3 mod 4;
ledit procédé comprenant les étapes suivantes :

/1/ obtenir une valeur du paramètre t ;
/2/ déterminer le point P en effectuant les sous étapes suivantes :

/i/ calculer (11) $X_1 = X_1(t)$, $X_2 = X_2(t)$ et $U = U(t)$
/ii/ tester (12) si le terme $f(X_1)$ est un terme au carré dans le corps fini Fq et dans ce cas, calculer (13) la racine carré du terme $f(X_1)$, le point P ayant pour abscisse $X_1$ et pour ordonnée $Y_1$ la racine carré du terme $f(X_1)$ ;
/iii/ sinon calculer (14) la racine carré du terme $f(X_2)$, le point P ayant pour abscisse $X_2$ et pour ordonnée $Y_2$ la racine carré du terme $f(X_2)$ ;

/3/ utiliser ledit point P dans une application cryptographique de chiffrement ou de hachage ou de signature ou d'authentification ou d'identification.

2. Procédé d'exécution d'un calcul cryptographique selon la revendication 1, dans lequel à l'étape /2/-/ii/, on effectue les étapes suivantes :

- calculer (21) $R_1$ tel que :

$$R_1 = f(X_1)^{\frac{q-1}{2}}$$

- si $R_1$ est égal à 1 (22),

    - décider que le terme f($X_1$) est un terme au carré dans le corps Fq ; et

    - calculer $Y_1 = f(X_1)^{\frac{q+1}{4}}$ (24)

    - sinon (23), calculer $Y_2 = f(X_2)^{\frac{q+1}{4}}$

**3.** Procédé d'exécution d'un calcul cryptographique selon la revendication 1, dans lequel à l'étape /2/-/ii/, on effectue les étapes suivantes :

    - calculer (311) R$_1$' tel que :

$$R_1^{'} = f(X_1)^{(q-1)-\frac{q+1}{4}}$$

    - calculer (312) R$_2$' tel que :

$$R_2^{'} = R_1^{'2}$$

    - calculer (313) R$_3$' tel que :

$$R_3^{'} = R_2^{'}.f(X_1)$$

dans lequel, si R$_3$' n'est pas égal à 1, à l'étape /2/-/iii/, on obtient (316) la racine carré de f($X_2$) selon l'équation suivante :

$$\sqrt{f(X_2)} = R_0.R_1^{'}$$

où R$_0$ vérifie l'équation suivante :

$$R_0 = U(t).(-1)^{(q-1)-\frac{q+1}{4}}$$

**4.** Procédé d'exécution d'un calcul cryptographique selon la revendication 3, dans lequel, si R$_3$' est égal à 1, à l'étape /2/-/iii/, on obtient (315) la racine carré de f($X_1$) selon l'équation suivante :

$$\sqrt{f(X_1)} = R'_3.f(X_1)$$

**5.** Procédé d'exécution d'un calcul cryptographique selon la revendication 1, dans lequel les polynômes sont exprimés dans des coordonnées jacobiennes selon lesquelles le point P(X,Y) s'écrit P(X',Y',Z) telles que :

$$X' = X \ .Z^2,$$

$$Y' = Y.Z^3$$

où la fonction f s'écrit $f_Z(X')$ et vérifie :

$$f_Z(X') = X'^3 + a.X'.Z^4 + b.Z^6$$

la courbe elliptique vérifiant l'équation :

$$Y'^2 = f_Z(X')$$

dans lequel les polynômes exprimés en coordonnées jacobiennes sont $X'_1(t)$, $X'_2(t)$, $Z(t)$ et $U'(t)$ et vérifient l'égalité en coordonnées jacobiennes :

$$U'(t)^2 = -f_{Z(t)}(X'_1(t)).f_{Z(t)}(X'_2(t))$$

et dans lequel Z(t) est déterminé de façon à ce que les opérations d'inversion soient transformées en opération de multiplication.

**6.** Procédé d'exécution d'un calcul cryptographique selon l'une quelconque des revendications précédentes, dans lequel, à l'étape /1/, la valeur du paramètre t est obtenue en fonction d'un mot de passe ou un identifiant.

**7.** Procédé d'exécution d'un calcul cryptographique selon l'une quelconque des revendications 1 à 6, dans laquelle l'application cryptographique est une application d'authentification ou d'identification par une entité de contrôle, et dans lequel, à l'étape /1/, on réalise les étapes suivantes :

/a/ générer une valeur aléatoire ;
/b/ obtenir une valeur chiffrée en chiffrant ladite valeur aléatoire sur la base d'une fonction de chiffrement utilisant une clé de chiffrement déterminée à partir d'un mot de passe ou identifiant correspondant au paramètre ; et
/c/ transmettre la valeur chiffrée à l'entité de contrôle.

**8.** Dispositif électronique comprenant des moyens adaptés pour la mise en oeuvre d'un procédé d'exécution d'un calcul cryptographique selon l'une quelconque des revendications 1 à 7.

**Patentansprüche**

**1.** Verfahren zum Ausführen einer kryptografischen Berechnung in einem elektronischen Bauelement, das einen Schritt des Erhaltens eines Punkts P (X, Y) ausgehend von mindestens einem Parameter t auf einer elliptischen Kurve aufweist, die die folgende Gleichung erfüllt:

$$Y^2 = f(X);$$

und
ausgehend von Polynomen $X_1(t)$, $X_2(t)$ und $U(t)$ die folgende Gleichheit erfüllt:

$$-f(X_1(t)).f(X_2(t)) = U(t)^2$$

und zwar im endlichen Körper $F_q$, unabhängig vom Parameter t, wobei q die Gleichung q = 3 mod 4 erfüllt; wobei das Verfahren die folgenden Schritte aufweist:

/1/ Erhalten eines Werts des Parameters t;
/2/ Bestimmen des Punkts P durch Durchführen der folgenden Teilschritte:

/i/ Berechnen (11) von $X_1=X_1(t)$, $X_2=X_2(t)$ und $U=U(t)$
/ii/ Testen (12), ob der Term $f(X_1)$ ein Term im Quadrat im endlichen Körper $F_q$ ist und, wenn dies der Fall ist, Berechnen (13) der Quadratwurzel des Terms $f(X_1)$, wobei der Punkt P als Abszisse $X_1$ und als Ordinate $Y_1$ die Quadratwurzel des Terms $f(X_1)$ aufweist;
/iii/ansonsten Berechnen (14) der Quadratwurzel des Terms $f(X_2)$, wobei der Punkt P als Abszisse $X_2$ und als Ordinate $Y_2$ die Quadratwurzel des Terms $f(X_2)$ aufweist;

/3/ Verwenden des Punkts P in einer kryptografischen Anwendung zur Verschlüsselung oder zum Hashen oder zur Signatur oder zur Authentifizierung oder zur Identifizierung.

2. Verfahren zum Ausführen einer kryptografischen Berechnung nach Anspruch 1, wobei im Schritt /2//ii/ die folgenden Schritte durchgeführt werden:

- Berechnen (21) von $R_1$ als:

$$R_1 = f(X_1)^{\frac{q-1}{2}}$$

- wenn $R_1$ gleich 1 ist (22);
- Entscheiden, dass der Term $f(X_1)$ ein quadratischer Term in dem Körper $F_q$ ist; und

- Berechnen (24) $Y_1 = f(X_1)^{\frac{q+1}{4}}$ von

- sonst (23) Berechnen von $Y_2 = f(X_2)^{\frac{q+1}{4}}$

3. Verfahren zum Ausführen einer kryptographischen Berechnung nach Anspruch 1, wobei im Schritt /2//ii/ die folgenden Schritte ausgeführt werden:

- Berechnen (311) von $R_1'$ als:

$$R_1' = f(X_1)^{(q-1)-\frac{q+1}{4}},$$

- Berechnen (312) von $R_2{}'$ als: $R_2{}' = R_1{}'^2$,
- Berechnen (313) von $R_3{}'$ als:

$$R_3{}' = R_2{}' \cdot f(X_1),$$

wobei, falls $R_3{}'$ nicht gleich 1 ist, im Schritt /2/-/iii/ die Quadratwurzel von $f(X_2)$ gemäß der folgenden Gleichung erhalten wird (316):

$$\sqrt{f(X_2)} = R_0 . R_1{}',$$

wobei $R_0$ die folgende Gleichung erfüllt:

$$R_0 = U(t).(-1)^{(q-1)-\frac{q+1}{4}}.$$

**4.** Verfahren zum Ausführen einer kryptografischen Berechnung nach Anspruch 3, wobei, wenn $R_3{}'$ gleich 1 ist, im Schritt /2/-/iii/ die Quadratwurzel von $f(X_1)$ gemäß der folgenden Gleichung erhalten wird (315):

$$\sqrt{f(X_1)} = R_3{}' . f(X_1)$$

**5.** Verfahren zum Ausführen einer kryptografischen Berechnung nach Anspruch 1, wobei die Polynome in Jacobi-Koordinaten ausgedrückt werden, gemäß denen der Punkt P(X,Y) als P(X', Y', Z) geschrieben wird wie:

$$X' = X \cdot Z^2,$$

$$Y' = Y \cdot Z^3$$

wo die Funktion f als $f_z(X')$ geschrieben wird und Folgendes erfüllt:

$$f_z(X') = X'^3 + a.X'.Z^4 + b.Z^6$$

wobei die elliptische Kurve die folgende Gleichung erfüllt:

$$Y'^2 = f_z(X')$$

in der die Polynome, die in Jacobi-Koordinaten ausgedrückt werden, $X'_1(t)$, $X'_2(t)$, $Z(t)$ und $U'(t)$ sind und die Gleichheit in Jacobi-Koordinaten erfüllen:

$$U'(t)^2 = -f_{Z(t)}(X'_1(t)).f_{Z(t)}(X'_2(t)))$$

und in der Z(t) derart bestimmt wird, dass die Inversionsoperationen in Multiplikationsoperationen umgewandelt werden.

6. Verfahren zum Ausführen einer kryptografischen Berechnung nach einem der vorhergehenden Ansprüche, wobei in Schritt /1/ der Wert des Parameters t in Abhängigkeit von einem Passwort oder einer Kennung erhalten wird.

7. Verfahren zum Ausführen einer kryptografischen Berechnung nach einem der Ansprüche 1 bis 6, wobei die kryptografische Anwendung eine Anwendung zur Authentifizierung oder Identifizierung durch eine Kontrollinstanz ist und wobei im Schritt /1/ die folgenden Schritte ausgeführt werden:

/a/ Erzeugen eines zufälligen Werts;
/b/ Erhalten eines verschlüsselten Werts durch Verschlüsseln des zufälligen Werts auf der Grundlage einer Verschlüsselungsfunktion unter Verwendung eines Verschlüsselungsschlüssels, der ausgehend von einem Passwort oder einer Kennung bestimmt wird, das/die dem Parameter entspricht; und
/c/ Senden des verschlüsselten Werts an die Kontrollinstanz.

8. Elektronische Vorrichtung, die Mittel aufweist, die zum Einsatz des Verfahrens zum Ausführen einer kryptografischen Berechnung nach einem der Ansprüche 1 bis 7 angepasst sind.

**Claims**

1. Method of execution of a cryptographic calculation in an electronic component comprising a step of obtaining a point P(X,Y) from at least one parameter t, on an elliptical curve satisfying the equation:

$$Y^2 = f(X);$$

and
starting from polynomials $X_1(t)$, $X_2(t)$, and U(t) satisfying the following equality:

$$-f(X_1(t)).f(X_2(t)) \ U(t)^2$$

in the finite field Fq, regardless of the parameter t, q satisfying the equation q = 3 mod 4;
said method comprising the following steps:

/1/ obtain a value of the parameter t;
/2/ determine the point P by executing the following substeps:

/i/ calculate (11) $X_1 = X_1(t)$, $X_2 = X_2(t)$ and U=U(t)
/ii/ test (12) whether the term $f(X_1)$ is a squared term in the finite field Fq and in this case calculate (13) the square root of the term $f(X_1)$, point P having $X_1$ as abscissa and the square root of the term $f(X_1)$ as ordinate $Y_1$;
/iii/ otherwise calculate (14) the square root of the term $f(X_2)$, point P having $X_2$ as abscissa and the square root of the term $f(X_2)$ as ordinate;

/3/ use said point P in a cryptographic application of encryption or hashing or signature or authentication or identification.

2. Method of execution of a cryptographic calculation according to claim 1, in which the following steps are executed at step /2/-/ii/:

- calculate (21) $R_1$ such that:

$$R_1 = f(X_1)^{\frac{q-1}{2}}$$

- if $R_1$ is equal to 1 (22),
- decide that the term f($X_1$) is a squared term in field Fq ; and

- calculate $Y_1 = f(X_1)^{\frac{q+1}{4}}$ (24)

- otherwise, calculate (23) $Y_2 = f(X_2)^{\frac{q+1}{4}}$

3. Method of execution of a cryptographic calculation according to claim 1, in which at step /2/-/ii/, the following steps are carried out: :

- calculate (311) $R_1$' such that:

$$R_1^{'} = f(X_1)^{q-1-\frac{q+1}{4}}$$

- calculate (312) $R_2$' such that:

$$R_2^{'} = R_1^{'\,2}$$

- calculate (313) $R_3$' such that:

$$R_3^{'} = R_2^{'}.f(X_1)$$

in which if $R_3$' is not equal to 1, at step /2/-/iii/, the square root of f($X_2$) is obtained (316) according to the following equation:

$$\sqrt{f(X_2)} = R_0.R_1^{'}$$

where $R_0$ satisfies the following equation:

$$R_0 = U(t).(-1)^{q-1-\frac{q+1}{4}}$$

4. Method of execution of a cryptographic calculation according to claim 3, in which, if $R_3'$ is equal to 1, at step /2/-/iii/, we obtain (315) the square root of $f(X_1)$ according to the following equation:

$$\sqrt{f(X_1)} = R_3'.f(X_1)$$

5. Method of execution of a cryptographic calculation according to claim 1, in which the polynomials are expressed in Jacobian coordinates according to which the point P(X,Y) is written P(X',Y',Z) such that:

$$X' = X \cdot Z^2,$$

$$Y' = Y.Z^3$$

where the function f is written $f_Z(X')$ and satisfies:

$$f_Z(X') = X'^3 + a.X'.Z^4 + b.Z^6$$

with the elliptical curve satisfying the equation:

$$Y'^2 = f_Z(X')$$

in which the polynomials expressed in Jacobian coordinates are $X'_1(t)$, $X'_2(t)$, $Z(t)$ and $U'(t)$ and satisfy the equality in Jacobian coordinates:

$$U'(t)^2 = -f_{Z(t)}(X'_1(t)).f_{Z(t)}(X'_2(t)))$$

and in which Z(t) is determined in such a way that the operations of inversion are transformed into operations of multiplication.

6. Method of execution of a cryptographic calculation according to any one of the preceding claims, in which, at step /1/, the value of the parameter t is obtained as a function of a password or an identifier.

7. Method of execution of a cryptographic calculation according to any one of claims 1 to 6, in which the cryptographic application is an application of authentication or identification by a checking entity, and
in which, at step /1/, the following steps are executed:

/a/ generate a random value;
/b/ obtain an encrypted value by encrypting said random value based on an encryption function using an encryption key determined from a password or identifier corresponding to the parameter; and
/c/ transmit the encrypted value to the checking entity.

8. Electronic device comprising means suitable for implementing a method of execution of a cryptographic calculation according to any one of claims 1 to 7.

(t)

$$X_1 = X_1(t) \; ; X_2 = X_2(t) \, et \, U = U(t)$$ —11

12— $f(X_1) = A^2$  N

Y

13— $P(X_1, Y_1)$    $P(X_2, Y_2)$ —14

# F IG.1.

$$R_1 = f(X_1)^{\frac{q-1}{2}}$$ —21

22— $R_1 = 1$  N

Y

24— $\sqrt{f(X_1)} = f(X_1)^{\frac{q+1}{4}}$    $\sqrt{f(X_2)} = f(X_2)^{\frac{q+1}{4}}$

23

# F IG.2.

$$R_1' = f(X_1)^{q-1-\frac{q+1}{4}}$$ —311

$$R_2' = R_1'^2$$ —312

$$R_3' = R_2' \times f(X_1)$$ —313

314

$$R_3' = 1$$ 　N

Y

$$R_4' = R_3' \times f(X_1)$$

315

$$R_4'' = R_0 \times R_1'$$

316

FIG.3.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MACIE ULAS.** *Rational points on certain hyperelliptic curves over finite fileds,* 11 Juin 2007